# EUROPÄISCHE PATENTSCHRIFT

(11) **EP 1 745 703 B1**
(45) Veröffentlichungstag und Bekanntmachung des Hinweises auf die Patenterteilung: **02.04.2008**
(21) Anmeldenummer: 06002117.7
(22) Anmeldetag: 02.02.2006
(51) Int. Cl.: A23K 1/00, A23K 1/18, A23K 1/10

(54) **Tierfutter mit Kern und Schale**
Animal feed comprising a core and a shell
Aliments pour animaux à structure coeur enveloppe

(30) Priorität: 22.07.2005 DE 102005034568
(43) Veröffentlichungstag der Anmeldung: 24.01.2007
(73) Patentinhaber: Mars Incorporated, 22101-3883 McLean (US)
(72) Erfinder: Schlebusch, Johannes, P., 27321 Thedinghausen (DE); Wasserfuhr, Ute, 29693 Hodenhagen (DE); De Bezenac, Emilie, 3062 VK Rotterdam (NL); Brauss, Michael, Leicestershire LE13 1TB (GB)
(74) Vertreter: Winkler, Andreas Fritz Ernst

(56) Entgegenhaltungen:
- WO-A-00/74496
- DE-A1- 2 337 291
- US-A- 4 777 058
- US-A- 4 822 626

## Beschreibung

Die vorliegende Erfindung betrifft ein Verfahren zur Herstellung eines Tierfutters mit einem Kern und einer den Kern zumindest teilweise abdeckenden Schale. Besonders bevorzugt weist dabei der Kern eine weiche fleischartige Textur auf, während der Überzug eine knusprige und trockene Textur zeigt.

Tierfutter mit einer solchen dualen Textur ist auf dem Fachgebiet gut bekannt. So beschreibt beispielsweise die WO 02/052951 A1 ein coextrudiertes, zweikomponentiges Tierfutterprodukt mit einer äußeren Komponente, die wenigstens 60% Getreide enthält, und einer inneren cremeartigen Komponente, die wasserlösliche Komponenten in einer wäßrigen Phase aufweist, die eine stabile Emulsion mit einer lipidfreien Kohlenwasserstoffphase bilden.

Die WO 00/74496 A1 beschreibt ein Tierfutterpäckchen, das aus einer äußeren trockenen Schale und einem inneren feuchten Kern besteht, wobei der Kern und die Schale durch eine feuchtigkeitsresistente Barriereschicht voneinander getrennt sind.

Die FR 2265287 A beschreibt ein Tierfutter, das eine Füllung umfaßt, die vollständig von einem Getreide enthaltenden expandierten Extrudat umgeben ist. Die Füllung enthält Fleisch, Zucker, pflanzliche Materialien und eine wirksame Menge eines mykostatischen Agens. Das Füllmaterial weist einen Feuchtigkeitsgehalt von 15-40 Gewichtsprozent und eine Wasseraktivität (a_{w}) von 0,70-0,90 auf.

Tierfutter mit einer Doppeltextur, nämlich einem weichen und feuchten Kern und einer trokkenen und vermeintlich knusprigen Schale sind somit aus dem Stand der Technik bekannt. Es wurde jedoch festgestellt, daß keines der bislang bekannten Tierfutter tatsächlich eine klare und dauerhafte Abgrenzung zwischen dem weichen Kern und der härteren Schale liefert. Vielmehr ist bei den bekannten Tierfuttern der Übergang zwischen weichem Kern und harter Schale mehr oder weniger fließend, insbesondere nach längerer Lagerzeit gleicht sich die Textur der beiden Komponenten so an, daß kaum ein Unterschied zwischen Kern und Schale wahrnehmbar ist. Dies beruht vermutlich auf einer Diffusion der Feuchtigkeit vom Kern in die Schale. Das Verschwinden des Unterschieds zwischen Kern und Schale beeinflußt insbesondere auch die mikrobiologische Sicherheit der Tierfutter (insbesondere bei hohem Feuchtigkeitsgehalt) und die Oxidationsstabilität von Fettkomponenten, die im Kernmaterial enthalten sein können.

Aus der US 4,777,058 A ist ein Verfahren zur Herstellung einer Tierfutterzusammensetzung bekannt, die ebenfalls einen weichen Kern und eine härtere Schale aufweist. Diese Tierfutterzusammensetzung wird hergestellt, indem zunächst die Komponenten der Schale durch eine Ringdüse in die Form einer kontinuierlichen Hohlform extrudiert werden. Die Komponenten des Kerns werden dann in einen Abschnitt der extrudierten Schale nach Ablauf einer bestimmten Zeitdauer extrudiert, die ausreichend sein muß, damit die Schale fest genug werden kann, um dem Druck der injizierten Kernkomponenten standzuhalten.

Aus der EP 1063897 B1 ist ein Haustier- oder Tierfuttermittelprodukt mit dualer Textur und ein Verfahren zu dessen Herstellung bekannt. Dieses Haustier- oder Tierfuttermittelprodukt weist eine Mantelkomponente auf, die eine weichere innere Komponente vollständig umschließt. Die Herstellung erfolgt dabei durch Coextrusion.

Für die Herstellung der beschriebenen Tierfutterprodukte kann die Extrusion und insbesondere die Coextrusion von Komponenten in einer Extrudervorrichtung für verschiedenste Materialien jedoch mit Problemen verbunden sein. Zur kontinuierlichen und verläßlichen Herstellung ist es notwendig, eine bestimmte Viskosität der zu extrudierenden Materialien, beispielsweise durch bestimmte Temperaturwahl, einzustellen, damit die Materialien durch den Extruder geführt werden können. Ferner muß dafür Sorge getragen werden, daß die verwendeten. Extrusiondüsen nicht verstopfen, was insbesondere leicht auftreten kann, wenn halbfeste Materialien extrudiert werden sollen, die gegebenenfalls noch feste Materialstücke enthalten können.

Aus der DE 23 37 291 A1 ist ein Tierfutter bekannt, das aus einem halbfeuchten inneren Kern und einer äußeren im wesentlichen festen Schale besteht. Die Herstellung des Tierfutters erfolgt durch Coextrusion, wobei anschließend die einzelnen erhaltenen Stücke in einem Ofen angeordnet und gebacken werden.

Die US 4,822,626 A beschreibt ein Verfahren zum Herstellen eines Trockentierfutterprodukts, wobei ein Kern mit einem Überzugsmaterial versehen wird. Der Überzug wird durch Vermischen der Kernmaterialien mit den Überzugsmaterialien aufgetragen.

Der vorliegenden Erfindung liegt die Aufgabe zugrunde, ein Verfahren zur Herstellung eines Tierfutters mit einem Kern und einer den Kern zumindest teilweise abdeckenden Schale be-reitzustellen, mit dem die Nachteile des Stands der Technik überwunden werden sollen. Insbesondere soll ein Verfahren bereitgestellt werden, daß auf eine Extrusion von Komponenten des Tierfutters verzichtet und auf äußerst einfache Art und Weise die Herstellung des Tierfutters ermöglicht. Das erhaltene Tierfutter soll über einen langen Zeitraum einen deutlichen Unterschied der Textur zwischen Schale und Kern bewahren, insbesondere auch wenn die Verpackung des Tierfutters geöffnet worden ist, eine mikrobiologische Sicherheit auch bei hohem Feuchtigkeitsgehalt des Kernmaterials gewährleisten und Oxidationsstabilität für ein Kernmaterial mit hohem Fettanteil zeigen. Der Texturunterschied zwischen Kern und Schale soll deutlich vom Verbraucher wahrnehmbar sein.

Diese Aufgabe wird gelöst durch ein Verfahren zum Herstellen eines Tierfutters mit einem Kern und einer den Kern zumindest teilweise abdeckenden Schale, wobei Kernausgangsmaterial
20-100 Gewichtsteile Fleisch und/oder fleischartige Komponenten,
0-30 Gewichtsteile zusätzliches Wasser,
0-25 Gewichtsteile Öl und/oder Fett,
0-15 Gewichtsteile Vitamine, Mineralien, Salze, Antioxidationsmittel, Farbstoffe und/oder Konservierungsmittel,
0-15 Gewichtsteile Pflanzenfasern,
1-20 Gewichtsteile Feuchthaltemittel, und
0-8 Gewichtsteile getrocknetes Tierblutplasma umfaßt,
und wobei Schalenausgangsmaterial
20-90 Gewichtsteile an pflanzlichem und/oder tierischem Protein,
0-30 Gewichtsteile Getreide, Stärke und/oder Dextrin,
0-50 Gewichtsteile Blutplasma,
0-30 Gewichtsteile Wasser,
10-80 Gewichtsteile Getreidederivat und/oder Zucker bzw. Zuckerderivat, und
0-10 Gewichtsteile Vitamine, Mineralien, Salze, Antioxidationsmittel, Farbstoffe und/oder Konservierungsmittel
   umfaßt,
wobei das Verfahren die folgenden Schritte umfaßt:
entweder
   (a1) Herstellen von Kernteilchen durch Mischen der Kernausgangsmaterialien, Backen der erhaltenen Mischung, Konditionieren, Kleinschneiden und nochmals Konditionieren, oder
   (a2) Herstellen von Kernteilchen durch Mischen der Kernausgangsmaterialien, Kaltausformen der erhaltenen Mischung und Kleinschneiden, und anschließend
   (b) Mischen der Kernteilchen mit den Komponenten der Schale in einer Dragieranlage, Backen oder Frittieren und abschließendes Konditionieren,
wobei der Wasseraktivitätswert des Kerns 0,4-0,6 beträgt.

Bevorzugt ist dabei, daß die Backtemperatur in Schritt (a1) etwa 150 bis 250°C und/oder die Backtemperatur in Schritt (b) etwa 150 bis 250°C beträgt und/oder die Backdauer jeweils etwa 1-20 Minuten, bevorzugt etwa 2-15 Minuten beträgt.

Auch wird vorgeschlagen, daß das Kaltausformen bei Raumtemperatur erfolgt.

Bevorzugt ist dabei, daß das Kernausgangsmaterial
50-75 Gewichtsteile Fleisch und/oder fleischartige Komponenten,
5-10 Gewichtsteile zusätzliches Wasser,
5-10 Gewichtsteile Öl und/oder Fett,
5-10 Gewichtsteile Vitamine, Mineralien, Salze, Antioxidationsmittel, Farbstoffe und/oder Konservierungsmittel,
5-10 Gewichtsteile Pflanzenfasern,
5-15 Gewichtsteile Feuchthaltemittel, und
2-7 Gewichtsteile getrocknetes Tierblutplasma umfaßt.

Besonders bevorzugt ist, daß die Schale 25-75 Gewichtsteile an pflanzlichem und/oder tierischem Protein und 3-25 Gewichtsteile Wasser umfaßt.

Auch wird vorgeschlagen, daß der Kern 20-70 Gewichtsteile, die Schale 30-80 Gewichtsteile und Finishing-Materialien 0-10 Gewichtsteile des Tierfutters ausmachen.

In einer Ausführungsform kann Öl und/oder Fett ein stabilisiertes Geflügelfett, stabilisiertes Sonnenblumenöl, stabilisiertes Palmöl, stabilisierter Rindertalg und/oder stabilisiertes Schweinefett sein.

Bevorzugt ist auch, daß das Fleisch und/oder die fleischartigen Komponenten aus Rind, Schwein, Geflügel, Lamm und/oder Fisch ausgewählt wird bzw. werden und vorzugsweise Innereien, bevorzugt Leber, und Haut, bevorzugt Geflügelhaut, sowie Fleischmehl, bevorzugt Geflügelmehl, Griebenmehl und/oder Fischmehl umfaßt bzw. umfassen.

Die Pflanzenfasern können Zellulosefasern sein, und das pflanzliche Protein kann Weizen- und/oder Maisgluten und/oder Reisprotein sein.

Es kann vorgesehen sein, daß das Getreidederivat der Schale Maiswachsstärke, Stärke mit hohem Amylosegehalt und/oder Reismehl ist, wobei die Stärke sowohl verkleistert als auch unverkleistert sein kann.

Besonders bevorzugt ist, daß das Zuckerderivat der Schale Glukosesirup oder ein Maisstärkeverzuckerungsprodukt ist. Das Verzuckerungsprodukt umfaßt vorzugsweise 14,7% Glucose, 12,3% Maltose, 13,7% Maltotriose und 59,3% Polysaccharide.

Am bevorzugtesten ist der Kern weich und im wesentlichen feucht, die Schale hart und im wesentlichen trocken.

Ebenfalls am bevorzugtesten ist, daß die Werte der Wasseraktivität des Kerns und der Schale sich nicht um mehr als 0,1 unterscheiden.

In einer weiteren bevorzugten Ausführungsform sind die a_{w}-Werte des Kerns und der Schale im wesentlichen gleich.

Bevorzugt wird keine Feuchtigkeitsbarriereschicht zwischen Kern und Schale ausgebildet.

Das Längenverhältnis auf dem Durchmesser des halbierten Produkts von Kern:Schale kann etwa 62:38 bis 80:20 betragen.

Eine Ausführungsform ist dadurch gekennzeichnet, daß der Kern einen Durchmesser von etwa 2 bis etwa 20 mm aufweist.

Auch wird vorgeschlagen, daß die Schale eine Dicke von etwa 0,5 bis etwa 6 mm aufweist.

Bevorzugt ist, daß die Schale den Kern vollständig abdeckt.

Das Feuchthaltemittel kann Glycerin sein.

Schließlich kann vorgesehen sein, daß das Gewichtsverhältnis von Kern:Schale etwa 50:50 beträgt.

Überraschenderweise wurde festgestellt, daß durch das erfindungsgemäße Verfahren ein Tierfutter mit einem weichen Kern und einer härteren Schale auf äußerst einfache Art und Weise hergestellt werden kann. In einer Alternative werden dabei zunächst die Kernteilchen durch Mischen der Kernausgangsmaterialien, dann Backen der erhaltenen Mischung, Konditionieren, Kleinschneiden und nochmaliges Konditionieren hergestellt. In einer anderen Alternative werden ebenfalls zunächst die Kernteilchen hergestellt durch Mischen der Kernausgangsmaterialien, Kaltausformen der erhaltenen Mischung und Kleinschneiden. Unter dem Begriff Kaltausformen soll hier das Bilden einer teigartigen Masse der Kernmaterialien bei Raumtemperatur verstanden werden, in der die einzelnen Kernteilchenkomponenten bspw. durch Verpressung zusammengehalten und miteinander verbunden werden. Bei der zweiten Alternative ist kein Backschritt bei einer erhöhten Temperatur erforderlich.

Die nach beiden Alternativen hergestellten Kernteilchen können dann einfach mit den flüssigen und festen Komponenten der Schale in einer Dragieranlage gemischt werden. Nach dem gründlichen Vermischen werden die mit einer Schale überzogenen Kernteilchen dann gebakken und anschließend konditioniert. Mit dem erfindungsgemäßen Verfahren ist es auf einfache Weise möglich, ein Tierfutter herzustellen, dessen Schale trotz des Kontakts mit dem weichen und feuchten Kern knusprig gehalten werden kann. Insbesondere wird ein Tierfutter bereitgestellt, mit dem einem Tier zu jeder Zeit frisches Fleisch zur Verfügung gestellt werden kann, das aufgrund der knusprigen schützenden Schale nicht verdirbt. Ferner wird ein Tierfutter bereitgestellt, das für das Tier schmackhaft und interessant ist. Für den Tierhalter wird ein Tierfütter bereitgestellt, daß sauber und einfach zu portionieren ist, keine übermäßige Reinigung von Schalen und anderen Utensilien erfordert und keine unangenehmen Gerüche zeigt.

Mit dem erfindungsgemäßen Verfahren wird ein Tierfutter hergestellt, bei dem der Unterschied zwischen der Textur des Kerns und der Schale über einen langen Zeitraum von über zehn Monaten bewahrt werden kann, sogar wenn die Verkaufspackung des Tierfutters bereits geöffnet worden ist. Ein Austrocknen des Kerns findet nicht statt, da dieser durch die Schale geschützt wird.

Weitere Vorteile und Merkmale des erfindungsgemäßen Verfahrens ergeben sich aus der folgenden detaillierten Beschreibung von bevorzugten Ausführungsformen.

Im Folgenden werden zunächst drei bevorzugte Rezepturen für ein Tierfutter gegeben. Alle Angaben sind Gewichtsteile, sofern nicht anderweitig bezeichnet. Die beiden Rezepturen I und II beziehen sich auf eine Alternative des Herstellungsverfahrens, bei dem die Kernausgangsmaterialien gebacken werden, wohingegen Rezeptur III für ein Verfahren steht, bei dem die Kernausgangmaterialien kalt ausgeformt werden.

### Fleischhaltiger Kern

| Rezeptur | I | II | III |
|---|---|---|---|
| Rinderleber | 23,9 | 23,9 | 20,5 |
| Schweinetracheen | 18 | 3 | 5 |
| Geflügelhaut | | 15 | |
| Schweinegriebenmehl | 14,1 | | |
| Geflügelmehl | | 14,0 | 41,7 |
| Wasser | 9,0 | 9,0 | |
| Geflügelfett | | 5,9 | 2,5 |
| Sonnenblumenöl | 8,9 | 3,0 | |
| Vitamine, Mineralien, Antioxidationsmittel und Konservierungsmittel | 8,0 | 8,0 | 8,6 |
| Pflanzenfaser | 7,6 | 7,7 | 8,3 |
| Glycerin | 6,5 | 6,5 | 7,0 |
| Getrocknetes Blutplasma (Schwein) | 4 | 4 | |
| Weizengluten | | | 2,0 |
| getrocknete Brauereihefe | | | 4,4 |

### Schalenkomponente (a)

| Rezeptur | I | II | III |
|---|---|---|---|
| Geflügelfeinmehl | 0,0 | 15,2 | 62,8 |
| Maisgluten | 30,0 | 22,4 | |
| Weizengluten | 20,0 | 19,4 | |
| Maiswachsstärke | 0,0 | 3,0 | |
| Stärke mit hohem Amylosegehalt (vorgelatinisiert) | 8,0 | 0,0 | |
| Reismehl | 2,0 | 0,0 | |

### Schalenkomponente (b)

| Rezeptur | I | II | III |
|---|---|---|---|
| Maistärkeverzuckerungssirup | 16,0 | 30,0 | |
| Wasser | 24,0 | 0,0 | |
| Maisquellflüssigkeit | 0,0 | 10,0 | |
| Blutplasma, flüssig, vom Schwein | | | 37,2 |

Mit dem Begriff Maisquellwasser wird ein aufkonzentriertes Maisquellwasser bezeichnet, wie es beispielsweise unter dem Handelsnamen Solulys^{®} Corn Steep Liquer erhältlich ist. Maisquellwasser ist das Wasser, in welchem Maiskörner vor weiteren Bearbeitungsschritten eingeweicht werden, wobei Maisinhaltsstoffe (Proteine, Kohlenhydrate, etc.) in das Wasser übergehen.

Die eingesetzten Kernmaterialien und Schalenkomponenten liegen bevorzugt in folgenden Anteilen vor: 20-70 Gewichtsteile Kernmaterialien, 30-80 Gewichtsteile Schale und, optional, 0-10 Gewichtsteile Finishing-Materialien.

Auf Basis der obigen Rezepturen wurde jeweils ein Tierfutter wie folgt hergestellt.

In einer ersten Verfahrensalternative wurde zunächst der weiche Kern für das Tierfutter gemäß der Rezepturen I und II hergestellt. Dazu wurden das gefrorene Fleisch und/oder die fleischartigen Komponenten zunächst gewürfelt und zerhackt. Dann wurden Öl und/oder Fett und Glycerin eingemischt sowie anschließend die weiteren funktionellen festen Inhaltsstoffe des Kerns zugegeben. Die erhaltene Mischung wurde zermahlen und gründlich vermischt. Diese Arbeiten wurden bei Raumtemperatur durchgeführt. Der Feuchtigkeitsgehalt der erhaltenen Mischung betrug etwa 44% und der a_{w}-Wert etwa 0,7-0,8. Die Mischung wurde dann in einem Ofen bei einer Temperatur von etwa 240°C gebacken und anschließend konditioniert, klein geschnitten, nochmals konditioniert und war fertig - mit einem Feuchtigkeitsgehalt von nunmehr etwa 20 bis 30% und einem a_{w}-Wert von etwa 0,6 - und konnte mit einer Schale versehen werden. Unter dem Begriff "Konditionieren" ist in der vorliegenden Anmeldung das Abkühlen der gebackenen Produkte mittels Aufbringen von Umgebungsluft zu verstehen.

In einer zweiten alternativen Verfahrensführung wurde ebenfalls zunächst eine Mischung der Kernmaterialien gemäß Rezeptur III, wie oben in der ersten Verfahrensalternative beschrieben, hergestellt. Die erhaltene Mischung wurde jedoch im Gegensatz zur ersten Alternative nicht in einem Ofen gebacken, sondern kalt ausgeformt und anschließend klein geschnitten. Das Kaltausformen fand bei Raumtemperatur statt und resultierte in einer teigartigen Masse der Kernmaterialien. Der Feuchtigkeitsgehalt der so erhaltenen Kernteilchen betrug ebenfalls etwa 20 bis 30% und der a_{w}-Wert war etwa 0,6.

Die aus jeder Verfahrensalternative erhaltenen Kernteilchen wurden mit der festen Komponente (a) und der flüssigen Komponente (b) (im wesentlichen Maisstärkeverzuckerungssirup) der Schale in einer Dragieranlage (auch dusting coating, pan coating oder drum coating genannt) vermischt, wodurch die Kernteilchen mit einem entsprechenden Schalenüberzug versehen wurden. Einem Fachmann auf dem Gebiet ist bekannt, wie durch geeignete Parameterauswahl und Prozeßführung gewünschte Teilchengrößen und Schalendicken eingestellt werden können. Anschließend wurden die überzogenen Kernteilchen zu einem Trommelsieber geführt, um zu kleine und zu große Tierfutterteilchen abzutrennen, und dann durch einen Backofen bei einer Temperatur von etwa 240°C geleitet, woraufhin sie konditioniert wurden. Optional kann abschließend ein Finishingpulver und/oder eine Finishingflüssigkeit in einer Vorrichtung für eine Abschlußbehandlung zugefügt werden, dem ein weiteres Konditionieren, Zwischenlagern und schließlich ein Verpacken der erhaltenen Tierfutterteilchen folgt. Unter einer Abschlußbehandlung (Finishing) kann beispielsweise das Aufbringen einer Mischung von stabilisiertem Öl/Fett mit einem flüssigen Proteinextrakt auf das gebackene Produkt verstanden werden. Weitere Möglichkeiten der Abschlußbehandlung sowie deren Durchführung sind einem Fachmann auf dem Gebiet ohne weiteres bekannt. Die a_{w} Werte des Kerns und der Schale des fertigen Tierfutters lagen in einem Bereich von 0,4-0,5, der Feuchtigkeitsgehalt betrug etwa 5-10%, bezogen auf das Gesamtgewicht der Futterteilchen.

Mit dem oben beschriebenen erfindungsgemäßen Verfahren sind Tierfutterteilchen unterschiedlichster Formen denkbar, beispielsweise in Bohnenform, Sternform oder Kugelform. Desweiteren kann die Oberfläche der Schale in beliebiger Weise eingestellt werden, beispielsweise eine glatte oder rauhe Oberfläche. Auch sind Teilchen des Tierfutters denkbar, die nur zu einem Teil mit einer Schale versehen worden sind, jedoch ein bestimmter Oberflächenbereich des Kerns unbeschichtet bleibt. Das Tierfutter kann in unterschiedlichsten Farben für die Schale hergestellt werden, in Abhängigkeit von den verwendeten Schalenmaterialien.

Die gemäß der oben angegebenen Rezepturen hergestellten Tierfutterprodukte wurden eingehend bezüglich ihrer Stabilität gegenüber Sauerstoff und Feuchtigkeit sowie bezüglich ihres a_{w}-Gleichgewichts untersucht. In diesen Untersuchungen wurden hervorragende Ergebnisse erhalten. Die unterschiedliche Textur zwischen harter und knuspriger Schale sowie weichem fleischartigen Kern wurde über viele Monate bewahrt, ohne daß die Schale signifikant aufgeweicht wurde. Die im Kern enthaltenen Fette sowie Fleischmaterialien wurden nicht oxidiert und waren auch nach mehreren Monaten nicht verdorben.

Das Tierfutter kann als Futter für die verschiedensten Tiere, bevorzugt Katzen und Hunde, verwendet werden.

Die in der vorstehenden Beschreibung und in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Herstellen eines Tierfutters mit einem Kern und einer den Kern zumindest teilweise abdeckenden Schale, wobei Kernausgangsmaterial
20-100 Gewichtsteile Fleisch und/oder fleischartige Komponenten,
0-30 Gewichtsteile zusätzliches Wasser,
0-25 Gewichtsteile Öl und/oder Fett,
0-15 Gewichtsteile Vitamine, Mineralien, Salze, Antioxidationsmittel, Farbstoffe und/oder Konservierungsmittel,
0-15 Gewichtsteile Pflanzenfasern,
1-20 Gewichtsteile Feuchthaltemittel, und
0-8 Gewichtsteile getrocknetes Tierblutplasma umfaßt,
und wobei Schalenausgangsmaterial
20-90 Gewichtsteile an pflanzlichem und/oder tierischem Protein,
0-30 Gewichtsteile Getreide, Stärke und/oder Dextrin,
0-50 Gewichtsteile Blutplasma,
0-30 Gewichtsteile Wasser,
10-80 Gewichtsteile Getreidederivat und/oder Zucker bzw. Zuckerderivat, und
0-10 Gewichtsteile Vitamine, Mineralien, Salze, Antioxidationsmittel, Farbstoffe und/oder Konservierungsmittel umfaßt,
wobei das Verfahren die folgenden Schritte umfaßt:
entweder
(a1) Herstellen von Kernteilchen durch Mischen der Kernausgangsmaterialien, Backen der erhaltenen Mischung, Konditionieren, Kleinschneiden und nochmals Konditionieren, oder
(a2) Herstellen von Kernteilchen durch Mischen der Kernausgangsmaterialien, Kaltausformen der erhaltenen Mischung und Kleinschneiden, und anschließend
(b) Mischen der Kernteilchen mit den Komponenten der Schale in einer Dragieranlage, Backen oder Frittieren und abschließendes Konditionieren
wobei der Wasseraktivitätswert (a_{w}-Wert) des Kerns 0,4-0,6 beträgt.

2. Verfahren nach Anspruch 1, **dadurch gekennzeichnet, daß** die Backtemperatur in Schritt (a1) etwa 150 bis 250°C und/oder die Backtemperatur in Schritt (b) etwa 150 bis 250°C beträgt und/oder die Backdauer jeweils etwa 1-20 Minuten, bevorzugt etwa 2-15 Minuten beträgt.

3. Verfahren nach Anspruch 1, **dadurch gekennzeichnet, daß** das Kaltausformen bei Raumtemperatur erfolgt.

4. Verfahren nach einem der vorangehenden Ansprüche, **dadurch gekennzeichnet, daß** das Kernausgangsmaterial
50-75 Gewichtsteile Fleisch und/oder fleischartige Komponenten,
5-10 Gewichtsteile zusätzliches Wasser,
5-10 Gewichtsteile Öl und/oder Fett,
5-10 Gewichtsteile Vitamine, Mineralien, Salze, Antioxidationsmittel, Farbstoffe und/oder Konservierungsmittel,
5-10 Gewichtsteile Pflanzenfasern,
5-15 Gewichtsteile Feuchthaltemittel, und
2-7 Gewichtsteile getrocknetes Tierblutplasma umfaßt.

5. Verfahren nach einem der vorangehenden Ansprüche, **dadurch gekennzeichnet, daß** die Schale 25-75 Gewichtsteile an pflanzlichem und/oder tierischem Protein umfaßt.

6. Verfahren nach einem der vorangehenden Ansprüche, **dadurch gekennzeichnet, daß** die Schale 3-25 Gewichtsteile Wasser umfaßt.

7. Verfahren nach einem der vorangehenden Ansprüche, **dadurch gekennzeichnet, daß** der Kern 20-70 Gewichtsteile, die Schale 30-80 Gewichtsteile und Finishing-Materialien 0-10 Gewichtsteile des Tierfutters ausmachen.

8. Verfahren nach einem der vorangehenden Ansprüche, **dadurch gekennzeichnet, daß** Öl und/oder Fett ein stabilisiertes Geflügelfett, stabilisiertes Sonnenblumenöl, stabilisiertes Palmöl, stabilisierter Rindertalg und/oder stabilisiertes Schweinefett ist.

9. Verfahren nach einem der vorangehenden Ansprüche, **dadurch gekennzeichnet, daß** das Fleisch und/oder die fleischartigen Komponenten aus Rind, Schwein, Geflügel, Lamm und/oder Fisch ausgewählt wird bzw. werden und vorzugsweise Innereien, bevorzugt Leber, und Haut, bevorzugt Geflügelhaut, sowie Fleischmehl, bevorzugt Geflügelmehl, Griebenmehl und/oder Fischmehl umfaßt bzw. umfassen.

10. Verfahren nach einem der vorangehenden Ansprüche, **dadurch gekennzeichnet, daß** die Pflanzenfasern Zellulosefasern sind.

11. Verfahren nach einem der vorangehenden Ansprüche, **dadurch gekennzeichnet, daß** das pflanzliche Protein Weizen- und/oder Maisgluten und/oder Reisprotein ist.

12. Verfahren nach einem der vorangehenden Ansprüche, **dadurch gekennzeichnet, daß** das Getreidederivat der Schale Maiswachsstärke, Stärke mit hohem Amylosegehalt und/oder Reismehl ist, wobei die Stärke sowohl verkleistert als auch unverkleistert sein kann.

13. Verfahren nach einem der vorangehenden Ansprüche, **dadurch gekennzeichnet, daß** das Zuckerderivat der Schale Glukosesirup oder ein Maisstärkeverzuckerungsprodukt ist.

14. Verfahren nach einem der vorangehenden Ansprüche, **dadurch gekennzeichnet, daß** im erhaltenen Tierfutter der Kern weich und im wesentlichen feucht ist, die Schale hart und im wesentlichen trocken ist.

15. Verfahren nach einem der vorangehenden Ansprüche, **dadurch gekennzeichnet, daß** die Werte der Wasseraktivität des Kerns und der Schale sich nicht um mehr als 0,1 unterscheiden.

16. Verfahren nach einem der vorangehenden Ansprüche, **dadurch gekennzeichnet, daß** die a_{w}-Werte des Kerns und der Schale im wesentlichen gleich sind.

17. Verfahren nach einem der vorangehenden Ansprüche, **dadurch gekennzeichnet, daß** keine Feuchtigkeitsbarriereschicht zwischen Kern und Schale ausgebildet wird.

18. Verfahren nach einem der vorangehenden Ansprüche, **dadurch gekennzeichnet, daß** im erhaltenen Tierfutter das Längenverhältnis auf dem Durchmesser des halbierten Produkts von Kern:Schale etwa 62:38 bis 80:20 beträgt.

19. Verfahren nach einem der vorangehenden Ansprüche, **dadurch gekennzeichnet, daß** der Kern einen Durchmesser von etwa 2 bis etwa 20 mm aufweist.

20. Verfahren nach einem der vorangehenden Ansprüche, **dadurch gekennzeichnet, daß** die Schale eine Dicke von etwa 0,5 bis etwa 6 mm aufweist.

21. Verfahren nach einem der vorangehenden Ansprüche, **dadurch gekennzeichnet, daß** die Schale den Kern vollständig abdeckt.

22. Verfahren nach einem der vorangehenden Ansprüche, **dadurch gekennzeichnet, daß** das Feuchthaltemittel Glycerin ist.

23. Verfahren nach einem der vorangehenden Ansprüche, **dadurch gekennzeichnet, daß** das Gewichtsverhältnis von Kern:Schale etwa 50:50 beträgt.

## Claims

1. Method of producing an animal food product with a core and a shell at least partially covering the core, core starting material comprising
20-100 parts by weight of meat and/or meat-like components,
0-30 parts by weight of additional water,
0-25 parts by weight of oil and/or fat,
0-15 parts by weight of vitamins, minerals, salts, antioxidising agents, dyes and/or preservatives,
0-15 parts by weight of vegetable fibres,
1-20 parts by weight of humectants, and
0-8 parts by weight of dried animal blood plasma,
and shell starting material comprising
20-90 parts by weight of vegetable and/or animal protein,
0-30 parts by weight of cereal, starch and/or dextrin,
0-50 parts by weight of blood plasma,
0-30 parts by weight of water,
10-80 parts by weight of cereal derivative and/or sugar or sugar derivative, and
0-10 parts by weight of vitamins, minerals, salts, antioxidising agents, dyes and/or preservatives,
the method comprising the steps of:
either
(a1) producing core particles by mixing the core starting materials, baking the resulting mixture, conditioning, cutting into small pieces and conditioning once more, or
(a2) producing core particles by mixing the core starting materials, cold-forming the resulting mixture and cutting into small pieces, and then
(b) mixing the core particles with the components of the shell in a coating pan, baking or deep-frying and final conditioning,
the water activity value (a_{w} value) of the core being 0.4-0.6.

2. Method according to Claim 1, **characterized in that** the baking temperature in step (a1) is about 150 to 250°C and/or the baking temperature in step (b) is about 150 to 250°C and/or the baking time is about 1-20 minutes and preferably about 2-15 minutes in each case.

3. Method according to Claim 1, **characterized in that** the cold-forming is performed at room temperature.

4. Method according to any one of the preceding claims, **characterized in that** the core starting material comprises
50-75 parts by weight of meat and/or meat-like components,
5-10 parts by weight of additional water,
5-10 parts by weight of oil and/or fat,
5-10 parts by weight of vitamins, minerals, salts, antioxidising agents, dyes and/or preservatives,
5-10 parts by weight of vegetable fibres,
5-15 parts by weight of humectants, and
2-7 parts by weight of dried animal blood plasma.

5. Method according to any one of the preceding claims, **characterized in that** the shell comprises 25-75 parts by weight of vegetable and/or animal protein.

6. Method according to any one of the preceding claims, **characterized in that** the shell comprises 3-25 parts by weight of water.

7. Method according to any one of the preceding claims, **characterized in that** the core accounts for 20-70 parts by weight, the shell 30-80 parts by weight and finishing materials 0-10 parts by weight of the animal food product.

8. Method according to any one of the preceding claims, **characterized in that** oil and/or fat is stabilized poultry fat, stabilized sunflower oil, stabilized palm oil, stabilized beef suet and/or stabilized pork fat.

9. Method according to any one of the preceding claims, **characterized in that** the meat and/or the meat-like components is or are selected from the group consisting of beef, pork, poultry, lamb and/or fish and preferably comprises or comprise offal, preferably liver, and skin, preferably poultry skin, and also meat meal, poultry meal, greaves meal and/or fish meal.

10. Method according to any one of the preceding claims, **characterized in that** the vegetable fibres are cellulose fibres.

11. Method according to any one of the preceding claims, **characterized in that** the vegetable protein is wheat gluten and/or maize gluten and/or rice protein.

12. Method according to any one of the preceding claims, **characterized in that** the cereal derivative of the shell is maize wax starch, starch with a high amylose content and/or rice flour, and the starch may be both gelatinized and ungelatinized.

13. Method according to any one of the preceding claims, **characterized in that** the sugar derivative of the shell is glucose syrup or a maize starch saccharification product.

14. Method according to any one of the preceding claims, **characterized in that**, in the animal food product obtained, the core is soft and substantially moist and the shell is hard and substantially dry.

15. Method according to any one of the preceding claims, **characterized in that** the water activity values of the core and the shell do not differ by more than 0.1.

16. Method according to any one of the preceding claims, **characterized in that** the a_{w} values of the core and the shell are substantially equal.

17. Method according to any one of the preceding claims, **characterized in that** no moisture barrier layer is formed between the core and the shell.

18. Method according to any one of the preceding claims, **characterized in that**, in the animal food product obtained, the core:shell length ratio on the diameter of the halved product is about 62:38 to 80:20.

19. Method according to any one of the preceding claims, **characterized in that** the core has a diameter of about 2 to about 20 mm.

20. Method according to any one of the preceding claims, **characterized in that** the shell has a thickness of about 0.5 to about 6 mm.

21. Method according to any one of the preceding claims, **characterized in that** the shell covers the core completely.

22. Method according to any one of the preceding claims, **characterized in that** the humectant is glycerine.

23. Method according to any one of the preceding claims, **characterized in that** the weight ratio of core:shell is about 50:50.

## Revendications

1. Procédé pour la fabrication d'un aliment pour animal avec un noyau et une coque recouvrant au moins en partie le noyau, la matière de base du noyau comprenant:
- 20 à 100 parties en poids de viande et/ou de composants carnés,
- 0 à 30 parties en poids d'eau additionnelle,
- 0 à 25 parties en poids d'huile et/ou de graisse,
- 0 à 15 parties en poids de vitamines, minéraux, sels, agent antioxydant, colorants et/ou agent conservateur,
- 0 à 15 parties en poids de fibres végétales,
- 1 à 20 parties en poids d'agent préservateur d'humidité,
- 0 à 8 parties en poids de plasma sanguin d'animal séché,
et la matière de base de la coque comprenant:
- 20 à 90 parties en poids de protéine végétale et/ou animale,
- 0 à 30 parties en poids de céréale, d'amidon et/ou de dextrine,
- 0 à 50 parties en poids de plasma sanguin,
- 0 à 30 parties en poids d'eau
- 10 à 80 parties en poids de dérivé de céréale et/ou de sucre ou de dérivé de sucre, et
- 0 à 10 parties en poids de vitamines, minéraux, sels, agent antioxydant, colorants et/ou agent conservateur,
le procédé comprenant les étapes suivantes :
(a1) fabrication de fragments de noyau par mélange des matières de base du noyau, cuisson du mélange obtenu, conditionnement, éminçage puis, de nouveau, conditionnement, ou
(a2) fabrication de fragments de noyau par mélange des matières de base du noyau, formage à froid du mélange obtenu puis éminçage, et ensuite
(b) mélange des fragments de noyau avec les composants de la coque dans un appareil à dragéifier, cuisson ou friture et conditionnement final,
la valeur d'activité de l'eau (valeur a_{w}) du noyau étant de 0,4 à 0,6.

2. Procédé selon la revendication 1, **caractérisé en ce que** la température de cuisson est d'environ de 150 à 250°C dans l'étape (a1) et/ou d'environ de 150 à 250°C dans l'étape (b), et/ou la durée de cuisson est respectivement d'environ 1 à 20 minutes, de préférence environ 2 à 15 minutes.

3. Procédé selon la revendication 1, **caractérisé en ce que** le formage à froid se fait à température ambiante.

4. Procédé selon l'une des revendications précédentes, **caractérisé en ce que** la matière de base du noyau contient
- 50 à 75 parties en poids de viande et/ou de composants carnés
- 5 à 10 parties en poids d'eau additionnelle
- 5 à 10 parties en poids d'huile et/ou de graisse
- 5 à 10 parties en poids de vitamines, minéraux, sels, agent antioxydant, colorants et/ou agent conservateur,
- 5 à 10 parties en poids de fibres végétales,
- 5 à 15 parties en poids d'agent préservateur d'humidité, et
- 2 à 7 parties en poids de plasma sanguin d'animal séché.

5. Procédé selon l'une des revendications précédentes, **caractérisé en ce que** la coque comprend 25 à 75 parties en poids de protéine végétale et/ou animale.

6. Procédé selon l'une des revendications précédentes, **caractérisé en ce que** la coque comprend 3 à 25 parties en poids d'eau.

7. Procédé selon l'une des revendications précédentes, **caractérisé en ce que** le noyau de 20 à 70 parties en poids, la coque de 30 à 80 parties en poids et les matières de finition de 0 à 10 parties en poids constituent l'aliment pour animal.

8. Procédé selon l'une des revendications précédentes, **caractérisé en ce que** l'huile et/ou la graisse est de la graisse de volaille stabilisée, de l'huile de tournesol stabilisée, de l'huile de palme stabilisée, du suif de boeuf stabilisé et/ou de la graisse de porc stabilisée.

9. Procédé selon l'une des revendications précédentes, **caractérisé en ce que** la viande et/ou les composants carnés est ou sont sélectionnés à partir de boeuf, de porc, de volaille, d'agneau et/ou de poisson, et comprend ou comprennent de préférence des abats - de préférence du foie, de la peau - de préférence de la peau de volaille, ainsi que de la farine de viande - de préférence de la farine de volaille, de la farine de creton et/ou de la farine de poisson.

10. Procédé selon l'une des revendications précédentes, **caractérisé en ce que** les fibres végétales sont des fibres cellulosiques.

11. Procédé selon l'une des revendications précédentes, **caractérisé en ce que** la protéine végétale est du gluten de blé et/ou de maïs et/ou de la protéine de riz.

12. Procédé selon l'une des revendications précédentes, **caractérisé en ce que** le dérivé de céréale de la coque est de l'amidon de maïs en cire, de l'amidon à haute teneur en amylose et/ou de la farine de riz, l'amidon pouvant être aussi bien empâté que non empâté.

13. Procédé selon l'une des revendications précédentes, **caractérisé en ce que** le dérivé de sucre de la coque est du sirop de glucose ou un produit de saccharification de l'amidon de maïs.

14. Procédé selon l'une des revendications précédentes, **caractérisé en ce que** dans l'aliment pour animal, le noyau est mou et substantiellement humide, la coque étant dure et substantiellement sèche.

15. Procédé selon l'une des revendications précédentes, **caractérisé en ce que** les valeurs de l'activité de l'eau du noyau et de la coque ne diffèrent pas de plus 0,1.

16. Procédé selon l'une des revendications précédentes, **caractérisé en ce que** les valeurs a_{w} du noyau et de la coque sont substantiellement les mêmes.

17. Procédé selon l'une des revendications précédentes, **caractérisé en ce qu'**aucune couche arrêtant l'humidité n'est constituée entre le noyau et la coque.

18. Procédé selon l'une des revendications précédentes, **caractérisé en ce que** dans l'aliment pour animal obtenu, le rapport de longueur noyau/coque sur le diamètre du produit partagé en deux est d'environ 62:38 à 80:20.

19. Procédé selon l'une des revendications précédentes, **caractérisé en ce que** le noyau présente un diamètre d'environ 2 à environ 20 mm.

20. Procédé selon l'une des revendications précédentes, **caractérisé en ce que** la coque présente une épaisseur d'environ 0,5 à environ 6 mm.

21. Procédé selon l'une des revendications précédentes, **caractérisé en ce que** la coque recouvre entièrement le noyau.

22. Procédé selon l'une des revendications précédentes, **caractérisé en ce que** l'agent préservateur d'humidité est de la glycérine.

23. Procédé selon l'une des revendications précédentes, **caractérisé en ce que** le rapport de poids noyau/coque est d'environ 50:50.
